# EUROPÄISCHE PATENTANMELDUNG

(11) **EP 4 325 148 A1**
(43) Veröffentlichungstag der Anmeldung: **21.02.2024**
(21) Anmeldenummer: 22190649.8
(22) Anmeldetag: 16.08.2022
(51) Int. Cl.: F25D 31/00

(54) **TRINKWASSERKÜHLSYSTEM ZUM KÜHLEN, SPEICHERN UND FILTERN VON TRINKWASSER**

(71) Anmelder: Aquis Systems AG, 9445 Rebstein (CH)
(72) Erfinder: HUCK, Kai, 9428 Walzenhausen (CH)
(74) Vertreter: Otten, Roth, Dobler & Partner mbB Patentanwälte

(57) **Zusammenfassung**

Es wird ein Trinkwasserkühlsystem zum Kühlen, Speichern und Filtern von Trinkwasser, wobei wenigstens ein Trinkwasserspeicher (2) zum Speichern des Trinkwassers und wenigstens eine Kühleinheit (8) zum Kühlen des im Trinkwasserspeicher (2) gespeicherten Trinkwassers sowie wenigstens eine zumindest ein Filterwasser umfassende Filtereinheit (3) zum Filtern und/oder Reinigen des zu kühlenden und zu speichernden Trinkwassers vorgesehen sind, wobei der Trinkwasserspeicher (2) wenigstens eine Einströmöffnung (4) zum Befüllen und/oder Einströmen des zu kühlenden und zu speichernden Trinkwassers und eine Ausströmöffnung (9) zum Entleeren und/oder Ausströmen des gekühlten und gespeicherten Trinkwassers umfasst, vorgeschlagen, wobei der konstruktive und wirtschaftliche Aufwand und/oder der Energieverbrauch gegenüber dem Stand der Technik möglichst verringert wird und/oder Komfort für den Nutzer verbessert wird. Dies wird erfindungsgemäß dadurch erreicht, die Kühleinheit (8) als Filter-Kühleinheit (8) zum wenigstens teilweisen Kühlen der Filtereinheit (3) und/oder des Filterwassers ausgebildet ist.

## Beschreibung

Die Erfindung betrifft ein Trinkwasserkühlsystem zum Kühlen, Speichern und Filtern von Trinkwasser nach dem Oberbegriff des Anspruchs 1.

### Stand der Technik

Wasserabgabegeräte sind üblicherweise an das öffentliche Wasserversorgungsnetz angeschlossen. Sie sind häufig als sogenannte Wasserspender ausgebildet und sind in öffentlichen Gebäuden, Hotels, Einkaufs und Krankenhäuser aufgestellt. Alternativ können entsprechende Wasserabgabegeräte als Untertisch oder Unterspülgeräte konzipiert sein, die aufbereitetes Wasser über Spülarmaturen abgeben können.

Bei allen Varianten besteht die Schwierigkeit, Wasser möglichst reiner Qualität, an den Verbraucher abzugeben. Zum einem wird der Gehalt an Verunreinigungen wie z.B. Mikroplastik, Chlor und Fehlgerüche etc., des abzugebenden Wassers von der Qualität des von der Wasserversorgungseinrichtung bereitgestellten Wassers vorgegeben. Darüber hinaus besteht die Gefahr, dass in Geräten mit einer Wasseraufheizeinrichtung Kalkablagerungen die Lebensdauer der Anlage reduziert.

Um einen Langzeitschutz zu garantieren sowie für die Entfernung von Schadstoffen im Trinkwasser werden Wasserfilter direkt in den Wasserkreislauf installiert.

Wasserabgabegeräte zur Abgabe von gekühltem und/oder gekühltem karbonisiertem Trinkwasser bzw. Sprudelwasser benötigen eine angeschlossene Kühlvorrichtung. Die Kühlvorrichtung kann mit einem aktiven Kühlaggregat, wie einem Kompressor oder Pelletier-Elementanordnung realisiert sein.

Eine weitreichende Ausführungsform von aktiven Kältequellen ist die Kühlanordnung bestehend aus einem elektrisch betriebenen Kompressor, einem zugeordneten Wärmetauscher und einer vom Kompressor angeströmten Kühlschlangenanordnung. Die Kühlschlangenanordnung ist in thermischen Kontakt mit dem zu kühlenden Fluid welches sich im Wassertank befindet. Zur Verbesserung der Kühleffizienz ist der Wärmetauscher direkt mit einem Lüfter verbunden um das Kühlmittel welches durch den Wärmetauscher strömt zu kühlen. Zur Verbesserung der Kühlleistung ist es unumgänglich der entstehende Wärmestrom über eine Luftzirkulation oder Luftleitkanal aus dem Wasserabgabegerät in die äußere Umgebung abzuführen.

Geräte, die in Gebäuden zum Einsatz kommen, werden i.d.R. an Orten installiert, bei denen Raumtemperatur herrscht. Bei längerem Stillstand des Gerätes erwärmen sich das Gerät und die darin befindlichen Medien ebenfalls auf Raumtemperatur. Bei Installationen, bei denen das Gerät z.B. in einem Schrank installiert wird, kann die Umgebungstemperatur des Gerätes erheblich über die Raumtemperatur ansteigen, wenn keine ausreichende Durchlüftung/Luftkühlung erfolgt. Um auch die im Bereitschaftsbetrieb bzw. Standby/Leerlaufbetrieb niedrige Solltemperatur des Kaltwassers sicherzustellen muss das Kühlsystem periodisch aktiviert werden, um die vorhandenen Wärmeverluste durch Nachkühlung auszugleichen. Dadurch wird regelmäßig vom Kühlkreislauf entsprechende Abwärme erzeugt, welche bei unzureichender Durchlüftung/Kühlung eine Erwärmung der innerhalb des Gehäuses verbauten Komponenten wie die Wasserführung, der Frischwassertank, der Filter, etc. und der Medien zur Folge hat.

Das gespeicherte Wasser im Wasserfilter liegt oftmals auf oder sogar über Raumtemperatur. Bei einem nachfolgenden Zapfvorgang von gekühlten Wasser fließt das auf die Umgebungstemperatur erwärmte Wasser des Filterreservoirs in den Kühltank nach. Durch das aufgewärmte Wasservolumen innerhalb des Kühltanks wird der Kühlprozess negative beeinflusst indem die Kühlzeit bis zum Erreichen einer niedrig eingestellten Wassertemperatur wesentlich zunimmt, was zu einem erhöhten Energieverbrauch und langer Wartezeit führt.

### Aufgabe und Vorteile der Erfindung

Aufgabe der Erfindung ist es ein Trinkwasserkühlsystem zum Kühlen, Speichern und Filtern von Trinkwasser vorzuschlagen, wobei der konstruktive und wirtschaftliche Aufwand und/oder der Energieverbrauch gegenüber dem Stand der Technik möglichst verringert wird und/oder Komfort für den Nutzer verbessert wird.

Diese Aufgabe wird, ausgehend von einem Trinkwasserkühlsystem der einleitend genannten Art, durch die Merkmale des Anspruchs 1. Durch die in den Unteransprüchen genannten Maßnahmen sind vorteilhafte Ausführungen und Weiterbildungen der Erfindung möglich.

Dementsprechend zeichnet sich ein erfindungsgemäßes Trinkwasserkühlsystem zum Kühlen, Speichern und Filtern von Trinkwasser dadurch aus, dass die Kühleinheit als Filter-Kühleinheit zum wenigstens teilweisen Kühlen der Filtereinheit und/oder des Filterwassers ausgebildet ist.

Mit Hilfe der erfindungsgemäßen Filter-Kühleinheit wird eine vollkommene Abkehr des bisherigen Systems verwirklicht, da bislang die Kühlung immer nur an die Karbonisation gekoppelt wurde, um diese zu verbessern, d.h. den CO2-Gehalt im Sprudelwasser zu erhöhen bzw. ein gasreicheres Sprudelwasser zu erzeugen.

Vorteilhafterweise weist die Filtereinheit wenigstens eine Filterlängsachse auf, wobei eine Filterlänge größer als eine Filterbreite und/oder ein Filterdurchmesser ist, und dass der Trinkwasserspeicher und/oder die Kühleinheit wenigstens eine Speicherlängsachse aufweist, wobei eine Speicherlänge größer als eine Speicherbreite und/oder ein Filterdurchmesser ist. Hiermit ist eine vorteilhafte Geometrie für die Kühlung des Filters verwirklichbar.

Beispielsweise ist die Filterlängsachse im Wesentlichen parallel zur Speicherlängsachse angeordnet. Hiermit wird eine vorteilhafte Ausrichtung der beiden Komponenten erreicht.

In einer vorteilhaften Variante der Erfindung weist die Filtereinheit wenigstens ein Filtergehäuse auf und zudem weist der Trinkwasserspeicher wenigstens ein Speichergehäuse und/oder die Kühleinheit wenigstens ein Kühlgehäuse auf. Vorteilhafterweise umfasst das Filtergehäuse wenigstens teilweise das Speichergehäuse und/oder das Kühlgehäuse.

In einer besonderen Weiterbildung der Erfindung weist das Filtergehäuse wenigstens eine Filtergehäusefläche und/oder das Speichergehäuse wenigstens eine Speichergehäusefläche aufweist und/oder das Kühlgehäuse wenigstens eine Kühlgehäusefläche auf. So kann in vorteilhafter Weise die Filtergehäusefläche wenigstens teilweise die Speichergehäusefläche und/oder Kühlgehäusefläche umfassen. Hierdurch ist in vorteilhafter Weise eine gute Wärmeübertragung bzw. Kühlung realisierbar. Zudem reduziert sich der konstruktive Aufwand.

Vorteilhafterweise ist wenigstens ein Kältebrückenelement zwischen der Filtereinheit und/oder dem Filtergehäuse sowie dem Trinkwasserspeicher und/oder dem Speichergehäuse und/oder der Kühleinheit und/oder dem Kühlgehäuse angeordnet, so dass die Filtereinheit und/oder das Filtergehäuse von der Kühleinheit und/oder dem Kühlgehäuse kühlbar ist und/oder eine Wärmeübertragung zwischen der Filtereinheit und/oder dem Filtergehäuse und der Kühleinheit und/oder dem Kühlgehäuse erfolgen kann. Hiermit kann die Kühlung weiter verbessert werden.

Beispielsweise ist das Kältebrückenelement als mit Gas, insbesondere Luft, gefüllter Spalt ausgebildet und/oder umfasst das Kältebrückenelement zumindest ein Wärmeleitmaterial, insbesondere eine Wärmeleitpaste oder Metall. Dies verbessert in erheblichem Maß die Wärmeübertragung bzw. Kühlung.

Vorteilhafterweise ist wenigstens eine thermische Isoliereinheit zum thermischen Isolieren wenigstens der Kühleinheit und/oder des Trinkwasserspeichers vorgesehen. So können Wärmeverluste verringert bzw. die Kühlung weiter verbessert werden.

Beispielsweise umfasst die Isoliereinheit wenigstens ein Isoliergehäuse und/oder Isolierummantelungselement, wobei zumindest die Filtereinheit und/oder das Filtergehäuse sowie der Trinkwasserspeicher und/oder das Speichergehäuse und/oder die Kühleinheit und/oder das Kühlgehäuse wenigstens teilweise innerhalb und/oder in einem Innenraum der Isoliereinheit und/oder des Isoliergehäuses und/oder Isolierummantelungselementes angeordnet sind. Hiermit kann eine besonders kompakte bzw. Platz sparende Umsetzung verwirklicht werden.

In einer vorteilhaften Ausführungsform der Erfindung ist die Filtereinheit in Strömungsrichtung des Trinkwassers vor dem Trinkwasserspeicher und/oder der Kühleinheit angeordnet. Somit wird das Trinkwasser bereits in vorteilhafter Weise im Filter vorgekühlt und anschließend dem Speicher bzw. Tank zugeführt und dort in vorteilhafter Weise weiter gekühlt.

Generell kann gemäß der Erfindung die Flüssigkeit im Speicher bzw. Kühltank energieeffizient und schnell auf niedere Temperatur gekühlt werden. So ist z.B. das gespeicherte Volumen, das sich im Reservoir des Wasserfilters befindet, kühlbar, so dass dieses in vorteilhafter Weise mindestens eine Temperatur unterhalb der herrschenden Umgebungstemperatur aufweist.

Vorteilhafte Ausführungsformen von Trinkwasserspender/-anlagen bzw. Sanitärarmaturen sind derart ausgebildet, dass sie z.B. den Wasserfilter innerhalb des Gehäuses integriert haben. Über einen vorteilhaften Mechanismus, z.B. in Form von einer Klappe oder Tür etc., kann der Zugang für den regelmäßigen Austausch des Filters verwirklicht werden. Dies verbessert die Wartung- bzw. Reparaturfreundlichkeit des Systems.

Als mögliche Ausführungsform wird in vorteilhafter Weise der Filter in das Modul des Kühltanks/-speichers eingebettet, indem z.B. eine Isolierung - in spezieller Ausführung eine einheitliche - die beide Komponenten Filter und Kühltank bzw. Speicher umgibt.

Der thermische Kontakt zwischen der ggf. metallischen Außenwand des Kühltanks und der Kammer des Wasserfilters kann beispielsweise über ein Kopplungselement mit hoher Wärmeleitfähigkeit, vorzugsweise Aluminium erfolgen. Stehen Filter und Kühltank/Speicher in vorteilhafter Weise dicht zueinander, so kann die Wärmeübertragung z.B. durch Konvektion über den gering vorhandenen Luftspalt erfolgen.

Eine vorteilhafte Temperaturdifferenz zwischen Kühltankaußenwand und dem Filtergehäuse bewirkt einen Entzug von thermischer Energie aus dem Filtermedium, wodurch eine Kühlung des im Filter gespeicherten Wassers erfolgt. Somit kann das in den Filter einfließende Leitungswasser auf ein Temperaturniveau unterhalb der Umgebungstemperatur stabilisiert werden. Durch diese Vorkühlung wird der nachfolgende Kühlprozess des Kaltwassers im Kühltank bzw. Speicher verbessert, wodurch die Kühlzeit wesentlich reduziert wird.

### Ausführungsbeispiel

Ein Ausführungsbeispiel der Erfindung ist in der Zeichnung dargestellt und wird anhand der einzigen Figur nachfolgend näher erläutert.

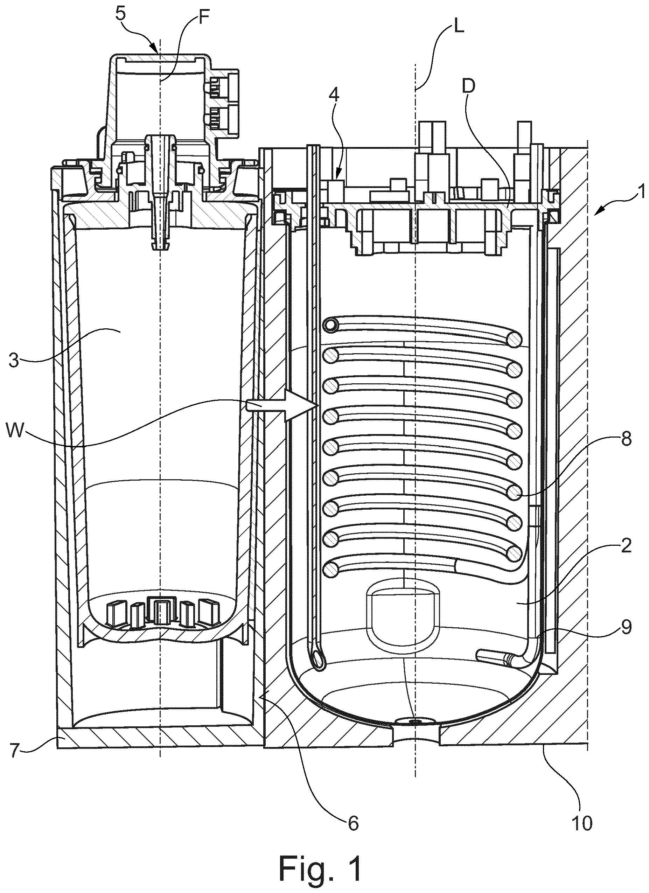

Figur 1 zeigt einen schematischen Schnitt durch eine gekühlte Baueinheit mit Filter und Wassertank.
Figur 1 zeigt ein Tanksystem 1 mit einem Tank 2. Der Tank 2 dient zunächst zur Kühlung von Wasser, welches über die Füllvorrichtung 4 deckelseitig über den Deckel D im oberen Bereich des Tanks 2 eingeleitet wird. Die Füllvorrichtung 4 umfasst ein Rohr, das gegenüber seiner Längsachse L radial zur Wandung des Tanks 2 hin verschoben ist. Dieses Rohr der Füllvorrichtung 4 umfasst einen Fülleinlass, der z.B. in eine Umlenkvorrichtung mündet. Diese Umlenkvorrichtung erstreckt sich kreisbogenförmig entlang der Wandung des Tanks 2 und verbessert das Einströmen des Wassers in vorteilhafter Weise.

Das Volumen V des Tanks 2 bildet einen Hohlzylinder, in dem eine Kühlwendel 8 angeordnet ist. Ferner ist ein Entnahmerohr 9 vorgesehen, welches z.B. als Lanze ausgebildet ist und vom Deckel D durch den Innenraum bis in den unteren Bereich des Tanks 2 vordringt. Somit kann der Tank 2 und das Tanksystem 1 von einer thermischen Schichtung profitieren, wenn die zu kühlende Flüssigkeit über die Wendel 8 fortwährend gekühlt wird und sich dabei gekühltes Wasser jedoch im unteren Bereich vornehmlich absetzt, sodass über die Lanze 9 auch entsprechend gekühltes Wasser entnommen werden kann.

Das gekühlte Wasser wird über das Entnahmerohr 9 weiter geführt. So wird in Strömungsrichtung des (gekühlten) Wassers in vorteilhafter Weise anschließend Kohlendioxid in das Wasser geleitet, um dieses zu karbonisieren. Das Entnahmerohr 9 und auch die Füllvorrichtung 4 können aus einem trinkwassertauglichen Kunststoff ausgebildet sein, der zudem zur Unterstützung der Kühlung thermisch leitfähig ist.

Vorteilhafterweise ist in Strömungsrichtung des Wassers vor dem Tank 2 ein Filter 3 vorgesehen/angeordnet. Der Filter weist einen Einlass 5 auf, in dem Wasser aus der Wasserleitung bzw. dem Trinkwassernetz oder dergleichen einströmt. Der Filter 3 weist eine Filterachse F auf, die in vorteilhafter Weise parallel zur Achse L des Tankes 2 angeordnet/ausgerichtet ist.

Zudem weisen der Filter 3 eine Gehäuse 7 und der Tank 2 ein Gehäuse 10 auf, die über eine Kontaktfläche miteinander in Kontakt sind, d.h. diese beiden Gehäuse berühren sich in vorteilhafter Weise. So kann Wärme bzw. thermische Energie W vom Filter 3 zum Tank 2 transportiert werden (vgl. Pfeil W). Das bedeutet, dass der Filter 3 gekühlt wird, nämlich mittels der Kühlwendel 8 des Tankes 2. So wird in vorteilhafter Weise ein Temperaturgradient generiert, der ein Abfallen bzw. Sinken der Temperatur vom Einlass 5 des Filters 3 über eine nicht näher dargestellte Leitung zum Tank 2 bis hinein in den Innenraum, insb. bis zum unteren Bereich des Tankes 2 ermöglicht.

So wird der Filter in dieser vorteilhaften Ausführungsform mittels der Kühlwendel 8 des Tankes 2 indirekt bzw. mittelbar über die Kontaktfläche 6 bzw. die Gehäuse 7, 10 in vorteilhafter Weise gekühlt. Beispielsweise kann zwischen dem Tank 2 bzw. dessen Wand/Gehäuse 10 und dem Filter 3 bzw. dessen Wand/Gehäuse 7 ein Wärmeleitmaterial in vorteilhafter Weise angeordnet werden bzw. vorhanden sein.

So kann der Wasserfilter bzw. Filter 3 durch eine vorteilhafte sog. "Kältebrücke" zwischen dem Kühltank 2 und dem Wasserfilter 3 gekühlt werden kann. Der Wasserfilter 3 ist vorteilhafterweise in unmittelbarer Nähe zum Kühltank 2 angeordnet. Der Wasserfilter wird beispielsweise thermisch isoliert, z.B. durch Einbettung des Filters 3 und des Kühlmodules bzw. des Tanks 2 bzw. dessen Gehäuse 10 in eine einheitliche bzw. gemeinsame, ummantelnde/umgebende thermische Isolierung.

Als vorteilhafte sog. "Kältebrücke" kann z.B. ein Luftspalt und/oder eine Isolierung und/oder in einer speziellen Ausführung mit einem vorteilhaften Wärmeleitelement realisiert bzw. wenigstens teilweise gefüllt werden, z.B. Metall. So kann über Konvektion bzw. Wärmeleitung eine vorteilhafte Wärmeübertragung vom Filter 3 zur gekühlten Außenwand bzw. Gehäuse 10 des Kühltanks 2 realisiert werden.

## Patentansprüche

1. Trinkwasserkühlsystem zum Kühlen, Speichern und Filtern von Trinkwasser, wobei wenigstens ein Trinkwasserspeicher (2) zum Speichern des Trinkwassers und wenigstens eine Kühleinheit (8) zum Kühlen des im Trinkwasserspeicher (2) gespeicherten Trinkwassers sowie wenigstens eine zumindest ein Filterwasser umfassende Filtereinheit (3) zum Filtern und/oder Reinigen des zu kühlenden und zu speichernden Trinkwassers vorgesehen sind, wobei der Trinkwasserspeicher (2) wenigstens eine Einströmöffnung (4) zum Befüllen und/oder Einströmen des zu kühlenden und zu speichernden Trinkwassers und eine Ausströmöffnung (9) zum Entleeren und/oder Ausströmen des gekühlten und gespeicherten Trinkwassers umfasst, **dadurch gekennzeichnet, dass** die Kühleinheit (8) als Filter-Kühleinheit (8) zum wenigstens teilweisen Kühlen der Filtereinheit (3) und/oder des Filterwassers ausgebildet ist.

2. Trinkwasserkühlsystem nach Anspruch 1, **dadurch gekennzeichnet, dass** die Filtereinheit (3) wenigstens eine Filterlängsachse (F) aufweist, wobei eine Filterlänge größer als eine Filterbreite und/oder ein Filterdurchmesser ist, und dass der Trinkwasserspeicher (2) und/oder die Kühleinheit (8) wenigstens eine Speicherlängsachse (L) aufweist, wobei eine Speicherlänge größer als eine Speicherbreite und/oder ein Filterdurchmesser ist.

3. Trinkwasserkühlsystem nach einem der vorgenannten Ansprüche, **dadurch gekennzeichnet, dass** die Filterlängsachse (F) im Wesentlichen parallel zur Speicherlängsachse (L) angeordnet ist.

4. Trinkwasserkühlsystem nach einem der vorgenannten Ansprüche, **dadurch gekennzeichnet, dass** die Filtereinheit (3) wenigstens ein Filtergehäuse (7) aufweist und dass der Trinkwasserspeicher (2) wenigstens ein Speichergehäuse (10) und/oder die Kühleinheit (8) wenigstens ein Kühlgehäuse (10) aufweist.

5. Trinkwasserkühlsystem nach einem der vorgenannten Ansprüche, **dadurch gekennzeichnet, dass** das Filtergehäuse (7) wenigstens teilweise das Speichergehäuse (10) und/oder das Kühlgehäuse (10) umfasst.

6. Trinkwasserkühlsystem nach einem der vorgenannten Ansprüche, **dadurch gekennzeichnet, dass** das Filtergehäuse (7) wenigstens eine Filtergehäusefläche (6) aufweist und/oder das Speichergehäuse (10) wenigstens eine Speichergehäusefläche (6) aufweist und/oder das Kühlgehäuse (10) wenigstens eine Kühlgehäusefläche (10) aufweist.

7. Trinkwasserkühlsystem nach einem der vorgenannten Ansprüche, **dadurch gekennzeichnet, dass** die Filtergehäusefläche (6) wenigstens teilweise die Speichergehäusefläche (6) und/oder Kühlgehäusefläche (6) umfasst.

8. Trinkwasserkühlsystem nach einem der vorgenannten Ansprüche, **dadurch gekennzeichnet, dass** wenigstens ein Kältebrückenelement (6) zwischen der Filtereinheit (3) und/oder dem Filtergehäuse (7) sowie dem Trinkwasserspeicher (2) und/oder dem Speichergehäuse (10) und/oder der Kühleinheit (8) und/oder dem Kühlgehäuse angeordnet ist, so dass die Filtereinheit (3) und/oder das Filtergehäuse (7) von der Kühleinheit (8) und/oder dem Kühlgehäuse (10) kühlbar ist und/oder eine Wärmeübertragung (W) zwischen der Filtereinheit (3) und/oder dem Filtergehäuse (7) und der Kühleinheit (8) und/oder dem Kühlgehäuse (10) erfolgen kann.

9. Trinkwasserkühlsystem nach einem der vorgenannten Ansprüche, **dadurch gekennzeichnet, dass** das Kältebrückenelement (6) als mit Gas, insbesondere Luft, gefüllter Spalt ausgebildet ist.

10. Trinkwasserkühlsystem nach einem der vorgenannten Ansprüche, **dadurch gekennzeichnet, dass** das Kältebrückenelement (6) zumindest ein Wärmeleitmaterial umfasst, insbesondere eine Wärmeleitpaste oder ein Metall.

11. Trinkwasserkühlsystem nach einem der vorgenannten Ansprüche, **dadurch gekennzeichnet, dass** wenigstens eine thermische Isoliereinheit zum thermischen Isolieren wenigstens der Kühleinheit (8) und/oder des Trinkwasserspeichers (2) vorgesehen ist.

12. Trinkwasserkühlsystem nach einem der vorgenannten Ansprüche, **dadurch gekennzeichnet, dass** die Isoliereinheit wenigstens ein Isoliergehäuse und/oder Isolierummantelungselement umfasst, wobei zumindest die Filtereinheit (3) und/oder das Filtergehäuse (7) sowie der Trinkwasserspeicher (2) und/oder das Speichergehäuse (10) und/oder die Kühleinheit (8) und/oder das Kühlgehäuse (10) wenigstens teilweise innerhalb und/oder in einem Innenraum der Isoliereinheit und/oder des Isoliergehäuses und/oder Isolierummantelungselementes angeordnet sind.

13. Trinkwasserkühlsystem nach einem der vorgenannten Ansprüche, **dadurch gekennzeichnet, dass** die Filtereinheit (3) in Strömungsrichtung des Trinkwassers vor dem Trinkwasserspeicher (2) und/oder der Kühleinheit (8) angeordnet ist.

14. Sanitärarmatureinheit zur Abgabe von wenigstens zweifach aufbereitetem Trinkwasser, insbesondere als gefiltertes/gereinigtes und gekühltes und vorzugsweise karbonisiertes Trinkwasser, mit wenigstens einem Trinkwasserkühlsystem nach einem der vorgenannten Ansprüche.
